# EUROPEAN PATENT APPLICATION

(11) **EP 3 446 929 A1**
(43) Date of publication of application: **27.02.2019**
(21) Application number: 16899445.7
(22) Date of filing: 22.04.2016
(51) Int. Cl.: B60R 19/18, B60R 19/34

(54) **ENERGY ABSORBING STRUCTURE**

(71) Applicant: Nissan Motor Co., Ltd., Yokohama-shi, Kanagawa 221-0023 (JP); Renault S.A.S., 92100 Boulogne-Billancourt (FR)
(72) Inventor: KURAI, Shohei, Atsugi-shi Kanagawa 243-0123 (JP); HAMADA, Yukihiro, Atsugi-shi Kanagawa 243-0123 (JP)
(74) Representative: Global IP Europe Patentanwaltskanzlei
(86) International application number: PCT/JP2016/062720
(87) International publication number: WO 2017/183173

(57) **Abstract**

Provided are a vehicle body frame member (7) that is disposed along the longitudinal direction of the vehicle body, a bumper member (21) provided at an end portion of the vehicle body, and an energy absorbing member (3) provided between the vehicle body frame member (7) and the bumper member (21). The vehicle body frame member (7) and the bumper member (21) are connected by a connecting member (5). The energy absorbing member (3) is formed from fiber-reinforced resin, and the connecting member (5) is formed from a non-brittle material. The connecting member (5) is attached so as to cover the outer side of the energy absorbing member (3).

## Description

### Technical Field

The present invention relates to an energy absorbing structure that uses an energy absorbing member made of fiber-reinforced resin.

### Background Art

Patent Document 1 discloses a structure in which an energy absorbing body made of fiber-reinforced resin is disposed at the distal end portion of a front side member positioned on the front side of a vehicle body. A bumper reinforcement is fixed to the front surface of the energy absorbing body and, at the time of a front-end collision of the vehicle, the energy absorbing body is crushed and absorbs the impact energy.

### Prior Art Documents

### Patent Documents

Patent Document 1: Japanese Patent No. 5570100

### Summary of the Invention

### Problem to be Solved by the Invention

Because the energy absorbing body is a brittle material obtained by hardening fibers with a matrix resin, the resin portion is pulverized upon being crushed, and the fibers are also torn apart. Consequently, there is the risk that the bumper reinforcement that is fixed to the front surface of the energy absorbing body will fall off the vehicle body together with the bumper fascia.

Thus, an object of the present invention is to prevent the bumper member from falling off the vehicle body when the energy absorbing member is crushed.

### Means of Achieving the Object

In the present invention, an energy absorbing member formed from fiber-reinforced resin is provided between the vehicle body frame member and the bumper member. The vehicle body frame member and the bumper member are connected by a connecting member formed from a non-brittle material.

### Effects of the Invention

According to the present invention, even if the energy absorbing member is crushed and torn apart, it is possible to prevent the bumper member from falling off the vehicle body, since a connecting member made of a non-brittle material connects the vehicle body frame member and the bumper member.

### Brief Description of the Drawings

Figure 1 is a perspective view of a lower portion of a vehicle body provided with an energy absorbing structure according to a first embodiment of the present invention.
Figure 2 is a side view including a partial cross section of the periphery of the energy absorbing structure of Figure 1.
Figure 3 is an exploded perspective view of the periphery of the energy absorbing structure of Figure 1.
Figure 4 is a cross-sectional view in plan view illustrating a modified example of the first embodiment.
Figure 5 is a cross-sectional view in plan view illustrating another modified example of the first embodiment.
Figure 6 is a cross-sectional view in plan view illustrating the second embodiment of the present invention.
Figure 7 is a cross-sectional view in plan view illustrating the third embodiment of the present invention.
Figure 8 is a cross-sectional view in plan view illustrating the fourth embodiment of the present invention.

### Embodiments to Carry Out the Invention

Embodiments for implementing the present invention are described in detail below with reference to the drawings.

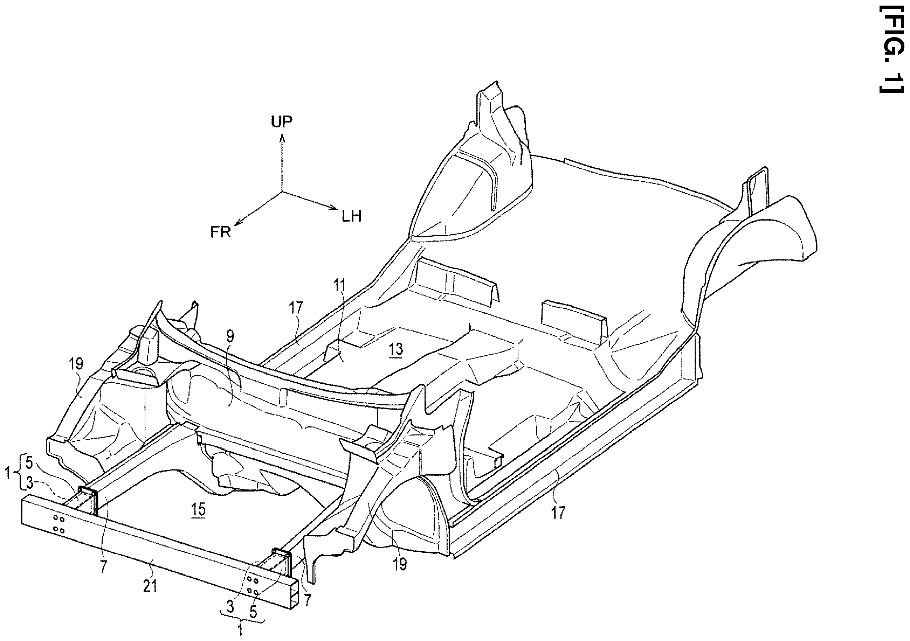

Figure 1 illustrates the lower portion of a vehicle body to which energy absorbing bodies 1 according to the first embodiment of the present invention are applied. In the drawings, the direction indicated by the arrow FR is the front of the vehicle body, the direction indicated by the arrow LH is the left side of the vehicle body, and the direction indicated by the arrow UP is the up direction of the vehicle body. The energy absorbing bodies 1 include an energy absorbing member 3, and a connecting member 5 is disposed so as to cover the outer side of the energy absorbing member 3.

The energy absorbing members 3 are made of a fiber-reinforced resin material that is formed by impregnating reinforcing fibers, for example carbon fibers, in a matrix resin, which is a resin for impregnation. The connecting members 5 are made from a non-brittle metal, such as iron or aluminum. The energy absorbing member 3 and the connecting member 5 both have the form of a quadrangular prism-shaped tube.

In the automobile vehicle body shown in Figure 1, a pair of left and right front side members 7 are disposed on both sides of the front of the vehicle body in the vehicle width direction, along the longitudinal direction of the vehicle body. The front side members 7 each constitutes a vehicle body frame member that forms the frame of the vehicle body and bends downward in the vicinity of the location that corresponds to the dash panel 9 and is joined to the lower surface of the floor panel 11. The dash panel 9 separates the vehicle cabin 13 and the engine compartment 15. Side sills 17 are disposed on both sides of the floor panel 11 in the vehicle width direction along the longitudinal direction of the vehicle body, and hood ledge panels 19 are disposed on the upper portion of the front side member 7 on the side of the engine compartment 15.

The energy absorbing bodies 1 described above are attached to the front-end portion of the front side members 7. A bumper reinforcement 21 is attached to the front-end portions of the energy absorbing bodies 1 on a side opposite of the front side members 7. The bumper reinforcement 21 is disposed along the vehicle width direction, and both ends thereof project farther outwardly in the vehicle width direction than the energy absorbing bodies 1.

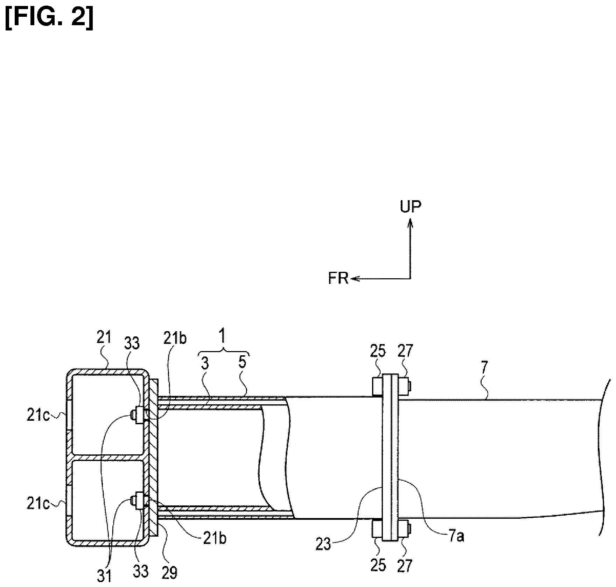

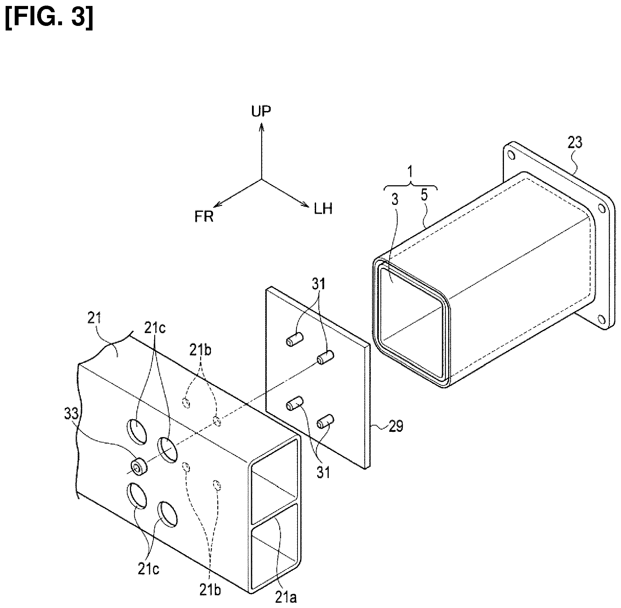

The bumper reinforcement 21 is a hollow member whose cross-sectional shape is long in the vertical direction and has a partition wall 21a in the center thereof in the vertical direction, and spaces having a cross section that is essentially square are formed above and below the partition wall 21a, as illustrated in Figures 2 and 3. A bumper fascia, not shown, is attached to the bumper reinforcement 21 to constitute a bumper member.

The front side members 7 are each in the form of a quadrangular prism-shaped tube, and each includes a front-end flange 7a at the front-end portion on the energy absorbing body 1 side, as illustrated in Figure 2. On the other hand, a rear-end mounting plate 23 is attached to the rear end of the energy absorbing body 1. The rear-end mounting plate 23 is fixedly joined to the rear end of the connecting member 5, for example, by welding. The front side member 7 and the connecting member 5 are connected and fixed by causing the front-end flange 7a and the rear-end mounting plate 23 to abut against each other and fastening the two with a plurality of bolts 25 and a plurality of nuts 27.

A front-end mounting plate 29 is attached to the front end of the energy absorbing body 1. The front-end mounting plate 29 is fixedly joined to the front end of the connecting member 5, for example, by welding. Four stud bolts 31 that project toward the bumper reinforcement 21 are provided on the front surface of the front-end mounting plate 29. Four bolt insertion holes 21b are provided on the rear surface of the bumper reinforcement 21 to accommodate the stud bolts 31. The bumper reinforcement 21 and the connecting member 5 are connected and fixed by inserting the stud bolts 31 into the bolt insertion holes 21b and fastening the nuts 33 to the stud bolts 31 by utilizing working holes 21c on the front surface.

The front end and the rear end of the energy absorbing member 3 disposed inside the connecting member 5 respectively abut the front-end mounting plate 29 and the rear-end mounting plate 23 and are fixed, for example, by an adhesive. At this time, a slight gap is formed between the outer surface of the energy absorbing member 3 and the inner surface of the connecting member 5 over the entire perimeter. The connecting member 5 and the energy absorbing member 3 can be attached so as to be in close contact with each other without a gap. As a result, it is not necessary to bond and fix the two front and rear ends of the energy absorbing member 3 to the front-end mounting plate 29 and the rear-end mounting plate 23 with an adhesive, which improves the assembly workability.

Described next is the impact absorption function when an automobile provided with the energy absorbing structure described above undergoes a front-end collision.

The impact load that is received by the bumper reinforcement 21 when the automobile undergoes a front-end collision is transmitted to the front side members 7 via the energy absorbing bodies 1. At this time, the energy absorbing bodies 1 deform so as to be crushed between the bumper reinforcement 21 and the front side members 7 to absorb the impact.

When the energy absorbing bodies 1 absorbs an impact, the impact is absorbed by means of, in particular, the energy absorbing members 3 being crushed and deformed. In the energy absorbing members 3, the resin portion is pulverized upon being crushed, and the fibers are also torn apart. At this time, the metal connecting members 5 disposed outside of the energy absorbing members 3 undergo plastic deformation upon absorption of impact.

The connecting members 5 undergo plastic deformation so as to be crushed, while maintaining a state of being connected and fixed to the bumper reinforcement 21 and to the front side members 7 via the front-end mounting plates 29 and the rear end mounting plates 23, respectively. Thus, it is possible to prevent the bumper reinforcement 21 that is fixed to the front surfaced of the energy absorbing bodies 1 from falling off the vehicle body (the front side members 7) together with the bumper fascia with the connecting members 5, even if the energy absorbing members 3 have broken away.

At this time, the connecting members 5 cover the outer side of the energy absorbing members 3. Thus, it is possible to prevent scattering to the outside of the energy absorbing member 3, which has been torn apart.

When the energy absorbing member 3 receives an impact load from the bumper reinforcement 21 and is broken apart, the connecting member 5 of the present embodiment transmits the impact load to the front side member 7 while undergoing plastic deformation. In this case, even after the energy absorbing member 3 has broken away, the connecting member 5 transmits the impact load to the front side member 7 while undergoing plastic deformation. Thus, the transmission of the load from the bumper reinforcement 21 to the front side member 7 is carried out more efficiently.

The connecting member 5 of the present embodiment is made of metal and is fixedly joined to the rear end mounting plate 23 on the side of the front side member 7 and to the front-end mounting plate 29 on the side of the bumper reinforcement 21 by welding. As a result, the connection state between the connecting member 5 and the front side member 7 and the bumper reinforcement 21 is further strengthened, and it is possible to more reliably prevent the bumper reinforcement 21 from falling off.

In the first embodiment described above, the tubular connecting member 5 is disposed on the outer side of the tubular energy absorbing member 3; however, the tubular connecting member 5 can also be disposed on the inner side of a tubular energy absorbing member 3. In addition, the energy absorbing member 3 and the connecting member 5 are both configured to have the form of a quadrangular prism-shaped tube, but the form can be another tubular shape, such as a tubular column shape. It is not necessary for the form of the connecting member 5 to be a tubular shape; for example, one or a plurality of plate-shaped or bar-shaped connecting members may be disposed on the outer side or the inner side of the energy absorbing member 3.

In the case of disposing the tubular connecting member 5 on the inner side of the tubular energy absorbing member 3, the energy absorbing member 3 is, for example, divided into two sections having a half-tubular shape. In this case, after the two front and rear ends of the connecting member 5 are each welded and fixed to the front-end mounting plate 29 and the rear end mounting plate 23, the two sections having a half-tubular shape are fixed so as to cover the connecting member 5 from the outer side by using, for example, an adhesive.

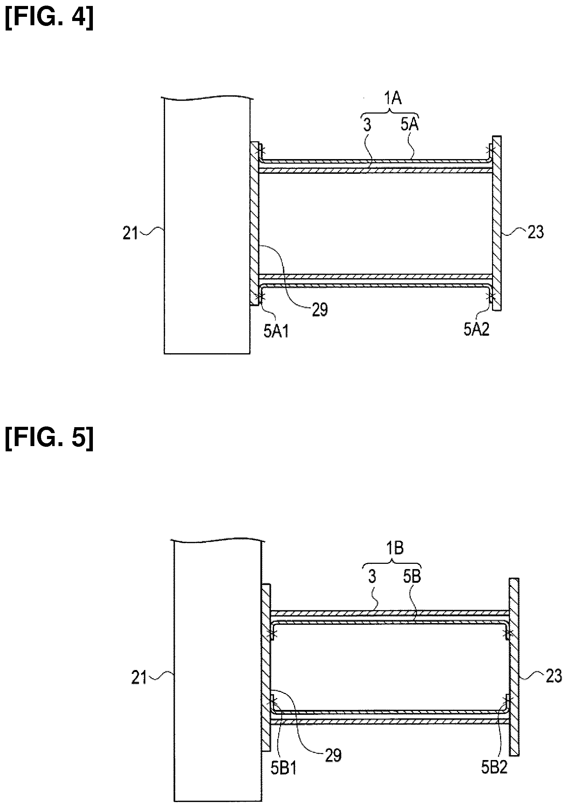

Figures 4 and 5 illustrate modified examples of the first embodiment described above.

In Figure 4, a tubular or plate-shaped connecting member 5A is disposed on the outer side of the tubular energy absorbing member 3 as an energy absorbing body 1A. In the energy absorbing body 1A, the connecting member 5A includes flanges 5A1, 5A2 that bend outward at both front and rear ends; these flanges 5A1, 5A2 are respectively welded and fixed to the front-end mounting plate 29 and the rear-end mounting plate 23 to achieve the connection.

In Figure 5, a plate-shaped connecting member 5B is disposed on the inner side of the tubular energy absorbing member 3 as an energy absorbing body 1B. In the energy absorbing body 1B, the connecting member 5B includes flanges 5B1, 5B2 that bend inward at both front and rear ends; these flanges 5B1, 5B2 are respectively welded and fixed to the front-end mounting plate 29 and the rear-end mounting plate 23 to achieve the connection.

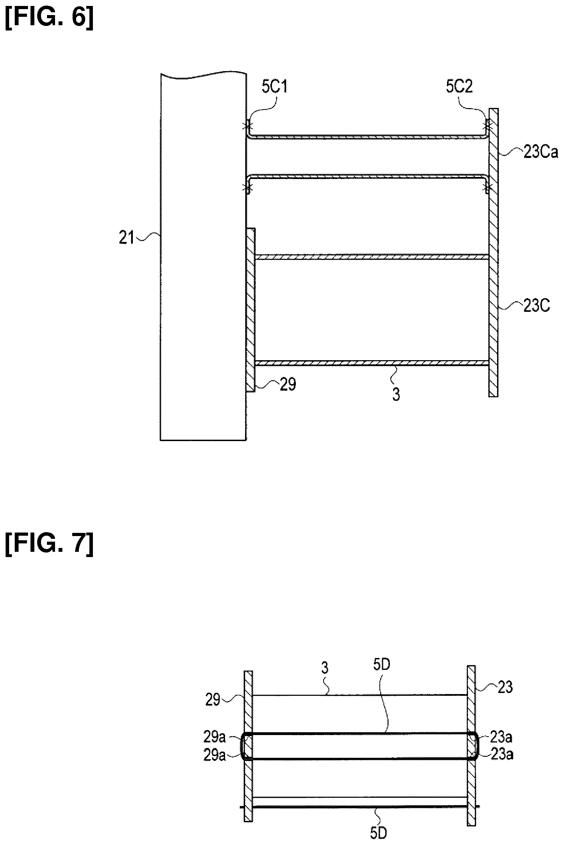

Figure 6 illustrates a second embodiment of the present invention.

In the second embodiment, a connecting member 5C is disposed in a position away from the energy absorbing member 3. The connecting member 5C has a tubular shape, such as a quadrangular prism shape, and front and rear flanges 5C1, 5C2 that bend outward are respectively welded and fixed to the bumper reinforcement 21 and a rear-end mounting plate 23C. The rear-end mounting plate 23C includes an extension portion 23Ca that extends so as to project with respect to a position corresponding to the front side member 7, and the rear end flange 5C2 is welded and fixed to the extension portion 23Ca.

In the second embodiment as well, when the energy absorbing member 3 is crushed and deformed, the connecting member 5C undergoes plastic deformation so as to be crushed, while maintaining a state of being connected and fixed to the bumper reinforcement 21 and to the front side member 7 via the front-end mounting plate 29 and the rear-end mounting plate 23C, respectively. Thus, it is possible to prevent the bumper reinforcement 21 from falling off the vehicle body (front side member 7) together with the bumper fascia with the connecting member 5C, even if the energy absorbing member 3 has broken away.

In the second embodiment as well, it is not necessary for the connecting member 5C to be tubular in shape; the form may be plate-shaped or bar-shaped. In addition, the rear end of the connecting member 5C may be connected to a vehicle body frame member other than the front side member 7, instead of connecting to the front side member 7 via the rear end mounting plate 23C.

Figure 7 illustrates a third embodiment of the present invention.

In the third embodiment, the connecting member 5D is formed from a flexible, non-brittle linear material. Examples of flexible linear materials include a cord formed of chemical fibers such as rayon, a metal wire or so-called wire, or a glass fiber line. The connecting member 5D made of a linear material is inserted into connecting holes 29a, 23a respectively formed on the front-end mounting plate 29 and the rear end mounting plate 23, and tied in order to realize the connection. Although the connecting member 5D is disposed on the outer side of a tubular energy absorbing member 3 in Figure 7, the connecting member may be disposed on the inner side as well.

In the third embodiment as well, when the energy absorbing member 3 is crushed and deformed, the connecting member 5D maintains a state of being connected to the bumper reinforcement 21 and to the front side member 7 via the front-end mounting plate 29 and the rear end mounting plate 23, respectively. Thus, it is possible to prevent the bumper reinforcement 21 from falling off the vehicle body (front side member 7) together with the bumper fascia with the connecting member 5D, even if the energy absorbing member 3 has broken away.

In the third embodiment, because the connecting member 5D is formed from a non-brittle linear material having flexibility, it is possible to reduce the weight compared to a case in which the connecting member has a tubular shape, a plate shape, or a bar shape and is made of metal. In addition, connection is easily achieved by inserting the connecting member 5D made of a linear material into the connecting holes 23a, 29a.

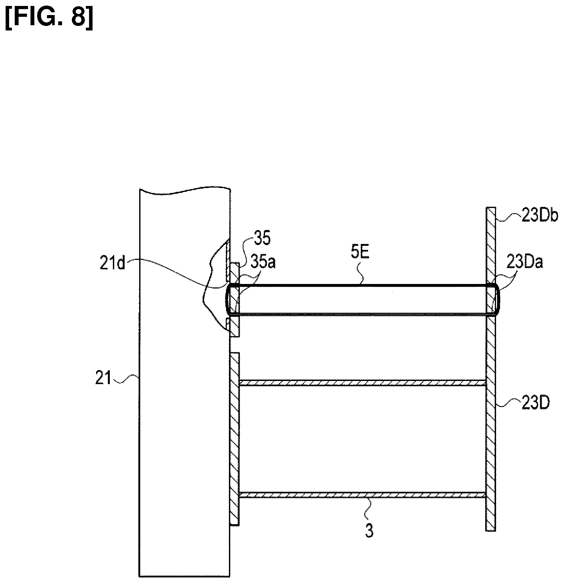

Figure 8 illustrates a fourth embodiment of the present invention.

In the fourth embodiment, a connecting member 5E is disposed in a location away from the energy absorbing member 3, in the same manner as the connecting member 5C of the second embodiment, shown in Figure 6. The connecting member 5E is formed from a flexible, non-brittle linear material, in the same manner as the connecting member 5D of the third embodiment shown in Figure 7.

The rear end of the connecting member 5E on the side with the front side member 7 is inserted into connecting holes 23Da formed on the rear end mounting plate 23D and tied in order to form the connection. The rear end mounting plate 23D includes an extension portion 23Db that extends so as to project with respect to a position corresponding to the front side member 7.

The front end of the connecting member 5E on the side with the bumper reinforcement 21 is inserted into connecting holes 35A formed on the connecting plate 35 and tied in order to form the connection. The connecting plate 35 is connected to the rear surface of the bumper reinforcement 21 by means of, for example, welding and fixing. An escape hole 21d for avoiding interference with the connecting member 5E is provided at a position on the rear surface of the bumper reinforcement 21 corresponding to the connecting member 5E.

In the fourth embodiment as well, when the energy absorbing member 3 is crushed and deformed, the connecting member 5E maintains a state of being connected to the bumper reinforcement 21 and to the front side member 7 via the connecting plate 35 and the rear end mounting plate 23D, respectively. Thus, it is possible to prevent the bumper reinforcement 21 from falling off the vehicle body (front side member 7) together with the bumper fascia with the connecting member 5E, even if the energy absorbing member 3 has broken away.

In addition, the rear end of the connecting member 5E can be connected to a vehicle body frame member other than the front side member 7, instead of being connected to the front side member 7 via the rear end mounting plate 23D, in the same manner as the connecting member 5C of Figure 6.

Embodiments of the present invention were described above, but these embodiments were described in order to facilitate comprehension of the present invention, and the present invention is not limited to the embodiments described. The technical scope of the present invention is not limited to the specific technical matter disclosed in the above-described embodiment, and includes various modifications, changes, and alternatives that can be easily derived therefrom.

For example, in the embodiments described above, examples were shown in which an energy absorbing structure including an energy absorbing member 3 is provided at the front of the vehicle body, but a similar effect can also be achieved by providing said energy absorbing structure at the rear of the vehicle body.

A woven fabric made of rayon or glass fibers can be used as the connecting member. Additionally, the connecting members 5A, 5B of Figures 4 and 5, if made of aluminum, may be connected and fixed to the front-end mounting plate 29 and the rear end mounting plate 23 by rivets.

### Industrial Applicability

The present invention is applied to an energy absorbing structure that employs an energy absorbing member made of fiber-reinforced resin.

### Descriptions of the Reference Symbols

3 Energy absorbing member
5, 5A, 5B, 5C, 5D, 5E Connecting member
7 Front side member (vehicle body frame member)
21 Bumper reinforcement (bumper member)
23a, 23Da, 29a, 35a Connecting hole

## Claims

1. An energy absorbing structure comprising:
a vehicle body frame member disposed along a longitudinal direction of a vehicle body;
a bumper member provided on an end portion of the vehicle body;
an energy absorbing member formed from fiber-reinforced resin and provided between the vehicle body frame member and the bumper member; and
a connecting member formed from a non-brittle material, which connects the vehicle body frame member and the bumper member.

2. The energy absorbing structure as recited in claim 1, wherein the connecting member covers an outer side of the energy absorbing member.

3. The energy absorbing structure as recited in claim 1 or 2, wherein the connecting member transmits an impact load to the vehicle body frame member while undergoing plastic deformation when the energy absorbing member is broken apart upon receiving an impact load from the bumper member.

4. The energy absorbing structure as recited in any one of claims 1 to 3, wherein the connecting member is made of metal and is fixedly joined to the vehicle body frame member and the bumper member.

5. The energy absorbing structure as recited in claim 1, wherein the connecting member is a flexible linear material and is connected by being inserted in a connecting hole provided on the vehicle body frame member and the bumper member.
